# EUROPÄISCHE PATENTSCHRIFT

(11) **EP 3 105 836 B1**
(45) Veröffentlichungstag und Bekanntmachung des Hinweises auf die Patenterteilung: **20.11.2024**
(21) Anmeldenummer: 15700528.1
(22) Anmeldetag: 16.01.2015
(51) Int. Cl.: H02J 50/12

(54) **SYSTEM ZUR INDUKTIVEN ENERGIEÜBERTRAGUNG UND VERFAHREN ZUM BETREIBEN EINES SOLCHEN SYSTEMS**
SYSTEM FOR INDUCTIVE POWER TRANSMISSION AND METHOD FOR OPERATING SUCH A SYSTEM
SYSTÈME DE TRANSFERT INDUCTIF D'ÉNERGIE ET PROCÉDÉ POUR LE FAIRE FONCTIONNER

(30) Priorität: 06.02.2014 DE 102014001485; 17.02.2014 DE 102014001986
(43) Veröffentlichungstag der Anmeldung: 21.12.2016
(73) Patentinhaber: SEW-EURODRIVE GmbH & Co. KG, 76646 Bruchsal (DE)
(72) Erfinder: PODBIELSKI, Leobald, 76199 Karlsruhe (DE); KUTZ, Michael, 76661 Philippsburg (DE); SCHWESINGER, Klaus, 76646 Bruchsal (DE)
(86) Internationale Anmeldenummer: PCT/EP2015/000071
(87) Internationale Veröffentlichungsnummer: WO 2015/117726

(56) Entgegenhaltungen:
- WO-A1-2013/176410
- WO-A1-92/17929
- WO-A1-99/26329
- DE-A1- 102006 022 223
- DE-U1- 20 110 712
- JP-A- 2012 044 762
- US-A1- 2013 285 604

## Beschreibung

Die Erfindung betrifft ein System zur induktiven Energieübertragung und ein Verfahren zum Betreiben eines Systems.

Es ist allgemein bekannt, dass Energie induktiv von einer Primärwicklung an eine Sekundärwicklung übertragbar ist.

Aus der WO 92/17929 A1 ist als nächstliegender Stand der Technik ein induktives Energieübertragungssystem bekannt.

Aus der US 2013 / 0285604 A1 ist eine Vorrichtung zur kabellosen Leistungsübertragung bekannt.

Aus der WO 2013/176410 A1 ist eine sekundärseitige Schutzvorrichtung für ein induktives Energieübertragungssystem bekannt.

Aus der WO 99 / 26329 A1 ist eine Steuerung induktiver Pick-Ups bekannt.

Aus der JP 2012 044 762 A ist ein Überspannungsschutz bei einem induktiven Energieübertragungssystem bekannt.

Aus der DE 201 10 712 U1 ist eine Schutzschaltung für ein induktives Leistungsübertragungssystem bekannt.

Aus der DE 10 2006 022223 A1 ist ein Anlagenteil bekannt.

Der Erfindung liegt daher die Aufgabe zugrunde, ein System zur induktiven Energieübertragung weiterzubilden, wobei eine erhöhte Sicherheit erreicht werden soll.

Erfindungsgemäß wird die Aufgabe bei dem System zur induktiven Energieübertragung nach den in Anspruch 1 und bei dem Verfahren zum Betreiben eines Systems nach den in Anspruch 10 angegebenen Merkmalen gelöst.

Wichtige Merkmale der Erfindung bei dem System zur induktiven Energieübertragung sind, dass eine Primärwicklung mit einer Sekundärwicklung induktiv gekoppelt vorgesehen ist,
wobei aus der Sekundärwicklung und zumindest einer in Reihe und/oder parallel zugeschalteten Kapazität ein Schwingkreis gebildet ist,
wobei ein oder der durch die Sekundärwicklung fließende Strom einem Gleichrichter zugeführt wird, dessen Ausgangsspannung einen Verbraucher speist,
wobei zwischen Verbraucher und Gleichrichter eine Trennvorrichtung, insbesondere Schaltkontakt, Schalter, und/oder Steckverbindung, angeordnet ist,
   - wobei ein steuerbarer Halbleiterschalter zum Kurzschließen des Eingangs des Gleichrichters vorgesehen ist
   - und/oder wobei ein steuerbarer Halbleiterschalter zum Bestromen einer Hilfswicklung vorgesehen ist, mittels welcher der Schwingkreis verstimmbar ist.

Von Vorteil ist dabei, dass bei elektrischem Trennen des Verbrauchers von dem Gleichrichter hohe Spannungen vermeidbar sind und somit die Sicherheit erhöht ist, da keine unzulässig hohen Spannungen entstehen, obwohl die Primärwicklung von einer Stromquelle gespeist ist. Denn mittels des Kurzschließens bricht die am Reihenschwingkreis ausgangsseitig auftretende Spannung zusammen und mittels der Bestromung der Hilfswicklung wird der Spulenkern der Sekundärwicklung mit einem von der Hilfswicklung erzeugten Magnetfeld beaufschlagt und somit die Magnetisierung des Spulenkerns beeinflusst, insbesondere der Spulenkern gesättigt, wodurch die Induktivität der Sekundärwicklung beeinflusst wird und somit die Resonanzfrequenz verschoben wird.

**Erfindungsgemäß** ist die Hilfswicklung auf demselben Spulenkern angeordnet wie die Sekundärwicklung. Von Vorteil ist dabei, dass durch Bestromung der Hilfswicklung die Magnetisierung des Spulenkerns veränderbar ist. Insbesondere ist der Spulenkern zumindest teilweise in Sättigung bringbar. Von dieser veränderten Magnetisierung des Spulenkerns ist aber auch die Induktivität der Sekundärwicklung abhängig und somit veränderbar, wodurch der Schwingkreis verstimmbar ist.

**Erfindungsgemäß** ist die Sekundärwicklung aus Teilwicklungen zusammengesetzt, wobei jeder Teilwicklung eine Kapazität in Reihe zugeschaltet ist. Von Vorteil ist dabei, dass die zwischen Windungsabschnitten der Sekundärwicklung bestehenden Spannungen reduzierbar sind.

Bei einer vorteilhaften Ausgestaltung ist der Schwingkreis ein Reihenschwingkreis. Von Vorteil ist dabei, dass bei einem Reihenschwingkreis hohe Spannungen erreichbar sind.

Bei einer vorteilhaften Ausgestaltung erzeugt ein Mittel zur Erfassung der am Ausgang des Gleichrichters anliegenden Spannung eine Ansteuerspannung für den oder die steuerbaren Halbleiterschalter, insbesondere wobei bei Überschreiten eines kritischen Wertes durch die am Ausgang des Gleichrichters anliegende Spannung der Halbleiter vom sperrenden in den leitenden Zustand versetzt wird. Von Vorteil ist dabei, dass abhängig von der Ausgangsspannung der Schwingkreis kurzschließbar oder verstimmbar ist. Wenn also die Ausgangsspannung am Gleichrichter einen kritischen Spannungswert überschreitet, ist der genannte Zustandswechsel ansteuerbar. Da wegen des Stromquellenverhaltens der die Primärwicklung speisenden Quelle bei Abtrennen des Verbrauchers, also beispielsweise Trennen der elektrischen Verbindungen zwischen Gleichrichter und Verbraucher, die Ausgangsspannung am Gleichrichter sehr hoch ansteigen kann, ist mittels des spannungsabhängigen Ansteuerns des Halbleiterschalters eine erhöhte Sicherheit erreichbar.

Bei einer vorteilhaften Ausgestaltung wird die Primärwicklung von einer Stromquelle mit einem Wechselstrom beaufschlagt. Von Vorteil ist dabei, dass ein stromquellenverhalten bei der speisenden Vorrichtung vorhanden sein darf und trotzdem ein Auftrennen der elektrischen Verbindungen zum Verbraucher erlaubt ist.

Bei einer vorteilhaften Ausgestaltung gleicht die Resonanzfrequenz des Schwingkreises der oder einer Frequenz des Wechselstroms zumindest im Wesentlichen. Von Vorteil ist dabei, dass bei der induktiven resonanten Übertragung ein hoher Wirkungsgrad auch bei schwacher induktiver Kopplung zwischen Primärwicklung und Sekundärwicklung erreichbar ist.

Bei einer vorteilhaften Ausgestaltung wird die Hilfswicklung mit unipolarem Strom beaufschlagt, wenn der steuerbare Halbleiterschalter in den leitenden Zustand versetzt ist. Von Vorteil ist dabei, dass das erzeugte Magnetfeld ebenfalls unipolar ist, also kein umpolendes Wechselmagnetfeld. Das von der Primärwicklung erzeugte Magnetfeld ist aber ein Wechselmagnetfeld, das somit dem von der Hilfswicklung erzeugten Magnetfeld überlagert wird. Der Arbeitspunkt an der magnetischen Kennlinie, also die Kennline zwischen magnetischer Flussdichte und Magnetfeldstärke, des Spulenkerns wird also entsprechend verschoben und somit auch die effektiv vorhandene Induktivität der Sekundärwicklung.

Bei einer vorteilhaften Ausgestaltung ist am Ausgang des Gleichrichters ein Kondensator zur Glättung der Spannung angeordnet. Von Vorteil ist dabei, dass die unipolare Spannjung im Wesentlichen eine Gleichspannung ist.

Bei einer vorteilhaften Ausgestaltung umfasst der Verbraucher einen Energiespeicher. Von Vorteil ist dabei, dass die übertragene Energie speicherbar ist und zeitversetzt zur Übertragung nutzbar ist.

Wichtige Merkmale bei dem Verfahren zum Betreiben eines Systems sind, dass beim Abtrennen des Verbrauchers von dem Ausgang des Gleichrichters die Ausgangsspannung des Gleichrichters ansteigt und bei Überschreiten eines kritischen Wertes der steuerbare Halbleiterschalter in den leitenden Zustand versetzt wird, wodurch
- der Schwingkreis verstimmt wird und/oder
- der Eingang des Gleichrichters kurzgeschlossen wird.

Von Vorteil ist dabei, dass die Sicherheit beim Auftrennen einer elektrischen Verbindung zwischen Gleichrichter und vom Gleichrichter gespeisten Verbraucher in einfacher Weise erhöht ist. Denn wenn die erfasste Spannung am Ausgangs des Gleichrichters den kritischen Spannungswert übersteigt, wird die Verstimmung oder der Kurzschluss veranlasst und somit die Spannung begrenzt.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun näher erläutert:

Das System **weist** primärseitig eine Speisevorrichtung auf, die ein Stromquellenverhalten hat und den kompensierte induktiven Übertrager speist. Hierbei ist der Primärwicklung eine Kapazität derart parallel oder in Reihe zugeschaltet, dass die zugehörige Resonanzfrequenz im Wesentlichen der Frequenz des von der Speisevorrichtung eingeprägten Wechselstromes entspricht.

Sekundärseitig ist ebenso eine Kapazität angeordnet, die zur Kompensation des induktiven Übertragers geeignet ist. Hierzu ist der Sekundärwicklung eine Kapazität derart parallel oder in Reihe zugeschaltet, dass die zugehörige Resonanzfrequenz im Wesentlichen der Frequenz des von der Speisevorrichtung 1 eingeprägten Wechselstromes entspricht.

Der sekundärseitige Wechselstrom wird einem Gleichrichter zugeführt, welcher die ausgangsseitige unipolare Spannung einem Verbraucher zur Verfügung stellt.

Bei einem weiteren erfindungsgemäßen Ausführungsbeispiel umfasst der Gleichrichter auch einen Wandler, wie beispielsweise Vierpol nach Art eines inversen Gyrators, so dass das Stromquellenverhalten in ein Spannungsquellenverhalten gewandelt wird.
die Sekundärwicklung **ist** in Teilwicklungen aufgeteilt, so dass diese mit Kapazitäten zur Spannungsreduzierung und einer weiteren Kapazität in Reihe geschaltet sind. Dabei sind die Kapazitäten derart dimensioniert, dass die zugehörige Resonanzfrequenz im Wesentlichen der Frequenz des von der Speisevorrichtung eingeprägten Wechselstromes entspricht. Mittels der Aufteilung der Sekundärwicklung in Teilwicklungen, welcher jeweils in Reihe eine Kapazität zugeschaltet ist, werden die bei der resonanten Übertragung aufschwingenden Spannungsspitzen reduziert.

Diese mit den Kapazitäten kompensierte Sekundärwicklung speist eine Schutzvorrichtung, aus welcher ein Verbraucher versorgbar ist.

Der Verbraucher ist mittels einer trennbaren Steckverbindung
und einer weiteren Trennvorrichtung, insbesondere Trenner und/oder Sicherung, mit dem Ausgang der Schutzvorrichtung verbunden. Da primärseitig ein Stromquellenverhalten vorliegt, würde ein Auftrennen der trennbaren Steckvorrichtung oder der weiteren Trennvorrichtung ein unzulässig hohes Ansteigen der ausgangsseitigen, also Verbraucherseitigen, Spannung bewirken.

Eingangsseitig, also zur Sekundärwicklung hin, weist die Schutzvorrichtung einen Gleichrichter auf, der als einphasiger Gleichrichter, insbesondere in Graetzschaltung, ausgeführt ist mittels der Dioden.

Dem Gleichrichter ist eine Kapazität C nachgeschaltet, der zur Spannungsglättung vorgesehen ist.

Von einem Mittel zur Spannungserfassung wird diese geglättete Spannung erfasst und eine jeweilige Ansteuerspannung erzeugt, die einem jeweiligen Halbleiterschalter, insbesondere Thyristor, zugeführt wird.

Das Schalten der Halbleiterschalter bewirkt einen Kurzschluss der Sekundärwicklung. Denn mittels der beiden Halbleiterschalter wird der Ausgang des Gleichrichters kurzgeschlossen, also die beiden Ausgangspole miteinander verbunden. Auf diese Weise ist ein Ansteigen der Ausgangsspannung verhinderbar.

Die Anordnung der Halbleiterschalter ist so ausgeführt, dass die Schaltelemente die obere oder untere Halbbrücke kurzschließen. Hierdurch kann erreicht werden, dass auch bei einer fehlerhaften Schaltung der Schaltelemente, beispielsweise bedingt durch EMV Störungen und/oder kurze Überspannungsspitzen, das Kurzschließen der Halbbrücke keinen Kurzschluss des nachgelagerten Batteriekreises verursacht. Dies ist von besonderer Bedeutung, da diese Schaltung als Schutzbeschaltung dient und von ihr selbst (auch bei Fehlfunktionen) keine potentielle Gefahr hervorgehen darf.

Würden die Schaltelemente, die den Kurzschluss verursachen den senkrechten Teil einer Diodenbrücke kurzschließen, würde die Batteriespannung kurzgeschlossen und die zwischengeschaltete Sicherung auslösen. Würde dann die Zündspannung der Thyristoren / Schaltelemente in diesem Betriebspunkt wegfallen, würde die Ausgangsspannung des Gleichrichters bis zur Zerstörung des Systems ansteigen.

Bei einer parallel kompensierten Sekundärseite kann auf ein Schaltelement, beispielsweise Thyristor, verzichtet werden. Da bei dieser Anordnung das Kurzschließen einer Diode eine Halbwelle des Schwingkreisstroms kurzschließt. Dies wiederum führt bei zweckmäßiger Ausgestaltung des Schwingkreises zu einer akzeptablen Ausgangsspannungsreduktion. Bei zweckmäßiger Auswahl der Schwingkreisfrequenz und Bauteilauswahl des Schaltelements als Thyristor ist - bedingt durch die Freiwerdezeit der Thyristor auch in Rückwärtsrichtung, leitend haltbar. In diesem Fall werden beide Halbwellen des Stroms kurzgeschlossen und die Ausgangsspannung sinkt weiter ab.

Wird hingegen bei einem seriell kompensierten Schwingkreis nur eine Diode des Gleichrichters kurzgeschlossen, erzeugt man durch diese Maßnahme eine Verdopplung der Ausgangsspannung, da das resultierende Ersatzschaltbild im Kurzschlussbetrieb eine Mittelpunktsgleichrichtung darstellt. Da dies für die Schutzfunktion nicht gewünscht ist, muss für den seriell kompensierten Schwingkreis ein Kurzschluss von zwei Dioden erfolgen.

Die Zwischenkreisspannung wird permanent von einer Messschaltung überwacht. Bei Übersteigen eines Grenzwerts, werden die erfindungsgemäßen Schutzmaßnahmen aktiviert. Zeitgleich erfolgt ein Befehl an die primäre Energieversorgungseinheit, die den primären Schwingkreis mit Energie versorgt, damit der Energiefluss unterbrochen wird. Die Umsetzung dieses Befehls kann je nach datentechnischer Anbindung der Systeme eine Umsetzungszeit von wenigen Millisekunden bis einige Sekunden dauern.

Die erfindungsgemäße Schutzbeschaltung ist für Dauerbetrieb ausgelegt. Der Datenkanal zur primären Energieversorgungseinheit muss dann nicht mehr Sicherheitsanforderungen entsprechen.

Die Messschaltung weist einen Energiespeicher auf, der auch bei Wegfall der Batteriespannung ausreichend Energie beinhaltet um die Schaltelemente zu versorgen. Ist der Speicherinhalt aufgebraucht, die Schaltelemente nicht mehr versorgt und der primäre Schwingkreis noch nicht deaktiviert, steigt die Ausgangsspannung des Gleichrichters wieder an. Der Energiespeicher der Messschaltung lädt sich auf und kann die Schaltelemente wieder durchschalten. Die Ausgangsspannung steigt jedoch auch in diesem Betriebsfall nicht über eine zulässige Schwelle an.

Wenn also die Ausgangsspannung, also die ausgangsseitig an der Schutzvorrichtung anliegende Spannung, ansteigt, sorgt der dann wie oben beschriebene Halbbrücken-Kurzschluss für eine Spannungsbegrenzung.

Alternativ **ist** eine Hilfswicklung vorsehbar, die fest verbunden ist mit der Sekundärwicklung und induktiv gekoppelt ist mit der Primärwicklung.

Bei Überschreiten eines kritischen Spannungswertes **wird** durch die Ausgangsspannung der Schutzvorrichtung mittels des Mittels zur Erfassung der Spannung eine Ansteuerspannung für einen Halbleiterschalter erzeugt, so dass dieser die Bestromung der ansonsten unbestromten Hilfswicklung frei gibt. Mittels der Bestromung wird die resonante induktive Übertragung verstimmt und somit die Spannung reduziert. Denn durch Verstimmen der Resonanz ist bewirkt, dass nur noch der übersetzte Strom, also der der Übersetzungszahl, also dem Verhältnis der Sekundärwicklung und Primärwicklung entsprechende Verhältniswert, der induktiven, also transformatorischen, Kopplung entsprechende Strom übertragen wird.

## Patentansprüche

1. System zur induktiven Energieübertragung,
wobei eine Primärwicklung mit einer Sekundärwicklung induktiv gekoppelt vorgesehen ist,
wobei aus der Sekundärwicklung und zumindest einer in Reihe und/oder parallel zugeschalteten Kapazität ein Schwingkreis gebildet ist,
**wobei** ein oder der durch die Sekundärwicklung fließende Strom einem Gleichrichter zugeführt wird, dessen Ausgangsspannung einen Verbraucher speist,
wobei zwischen Verbraucher und Gleichrichter eine Trennvorrichtung, insbesondere Schaltkontakt, Schalter, und/oder Steckverbindung, angeordnet ist,
**dadurch gekennzeichnet, dass**
- ein steuerbarer Halbleiterschalter zum Kurzschließen des Eingangs des Gleichrichters vorgesehen ist
- und/oder wobei ein steuerbarer Halbleiterschalter zum Bestromen einer Hilfswicklung vorgesehen ist, mittels welcher der Schwingkreis verstimmbar ist,
wobei die Hilfswicklung auf demselben Spulenkern angeordnet ist wie die Sekundärwicklung,
wobei die Sekundärwicklung aus Teilwicklungen zusammengesetzt ist, wobei jeder Teilwicklung eine Kapazität in Reihe zugeschaltet ist.

2. . System nach Anspruch 1,
**dadurch gekennzeichnet, dass**
der Gleichrichter in Graetzschaltung ausgeführt ist.

3. System nach mindestens einem der vorangegangenen Ansprüche,
**dadurch gekennzeichnet, dass**
der Schwingkreis ein Reihenschwingkreis ist.

4. System nach mindestens einem der vorangegangenen Ansprüche,
**dadurch gekennzeichnet, dass**
ein Mittel zur Erfassung der am Ausgang des Gleichrichters anliegenden Spannung eine Ansteuerspannung für den oder die steuerbaren Halbleiterschalter erzeugt,
insbesondere wobei bei Überschreiten eines kritischen Wertes durch die am Ausgang des Gleichrichters anliegende Spannung der Halbleiter vom sperrenden in den leitenden Zustand versetzt wird.

5. System nach mindestens einem der vorangegangenen Ansprüche,
**dadurch gekennzeichnet, dass**
die Primärwicklung von einer Stromquelle mit einem Wechselstrom beaufschlagt wird.

6. System nach mindestens einem der vorangegangenen Ansprüche,
**dadurch gekennzeichnet, dass**
die Resonanzfrequenz des Schwingkreises der oder einer Frequenz des Wechselstroms zumindest im Wesentlichen gleicht.

7. System nach mindestens einem der vorangegangenen Ansprüche,
**dadurch gekennzeichnet, dass**
die Hilfswicklung mit unipolarem Strom beaufschlagt wird, wenn der steuerbare Halbleiterschalter in den leitenden Zustand versetzt ist.

8. System nach mindestens einem der vorangegangenen Ansprüche,
**dadurch gekennzeichnet, dass**
am Ausgang des Gleichrichters ein Kondensator zur Glättung der Spannung angeordnet ist.

9. System nach mindestens einem der vorangegangenen Ansprüche,
**dadurch gekennzeichnet, dass**
der Verbraucher einen Energiespeicher umfasst.

10. Verfahren zum Betreiben eines Systems nach mindestens einem der vorangegangenen Ansprüche,
**wobei die Primärwicklung mit der Sekundärwicklung induktiv gekoppelt vorgesehen ist,**
**dadurch gekennzeichnet, dass**
beim Abtrennen des Verbrauchers von dem Ausgang des Gleichrichters die Ausgangsspannung des Gleichrichters ansteigt und bei Überschreiten eines kritischen Wertes der steuerbare Halbleiterschalter in den leitenden Zustand versetzt wird, wodurch
- der Schwingkreis **mittels Bestromens der Hilfswicklung** verstimmt wird und/oder
- der Eingang des Gleichrichters kurzgeschlossen wird,
wobei die Hilfswicklung auf demselben Spulenkern angeordnet ist wie die Sekundärwicklung,
die Sekundärwicklung aus Teilwicklungen zusammengesetzt ist, wobei jeder Teilwicklung eine Kapazität in Reihe zugeschaltet ist.

## Claims

1. System for inductive energy transmission,
wherein a primary winding is provided in a manner inductively coupled to a secondary winding,
wherein a resonant circuit is formed out of the secondary winding and at least one capacitor wired in series and/or in parallel,
wherein a or the current flowing through the secondary winding is supplied to a rectifier, the output voltage of which feeds a load,
wherein a disconnector, in particular a switch contact, a switch and/or a plug connection, is arranged between the load and the rectifier,
**characterised in that**
- a controllable semiconductor switch is provided for shorting the input of the rectifier,
- and wherein a controllable semiconductor switch is provided for applying current to an auxiliary winding by means of which the resonant circuit can be detuned,
wherein the auxiliary winding is arranged on the same coil core as the secondary winding,
wherein the secondary winding is composed of part-windings, wherein a capacitor is wired in series with each part-winding.

2. System according to claim 1,
**characterised in that**
the rectifier is configured in a Graetz circuit.

3. System according to at least one of the preceding claims,
**characterised in that**
the resonant circuit is a series resonant circuit.

4. System according to at least one of the preceding claims,
**characterised in that**
a means for recording the voltage applied at the output of the rectifier generates an actuation voltage for the controllable semiconductor switch(es),
in particular wherein the semiconductor is transferred from the blocking to the conducting state when the voltage applied at the output of the rectifier exceeds a critical value.

5. System according to at least one of the preceding claims,
**characterised in that**
an alternating current is applied to the primary winding by a current source.

6. System according to at least one of the preceding claims,
**characterised in that**
the resonant frequency of the resonant circuit is at least substantially equal to the or a frequency of the alternating current.

7. System according to at least one of the preceding claims,
**characterised in that**
unipolar current is applied to the auxiliary winding when the controllable semiconductor switch is transferred to the conducting state.

8. System according to at least one of the preceding claims,
**characterised in that**
a capacitor for smoothing the voltage is arranged at the output of the rectifier.

9. System according to at least one of the preceding claims,
**characterised in that**
the load comprises an energy storage device.

10. Method for operating a system according to at least one of the preceding claims, wherein the primary winding is provided in a manner inductively coupled to the secondary winding,
**characterised in that**
when the load is disconnected from the output of the rectifier, the output voltage of the rectifier increases, and when a critical value is exceeded, the controllable semiconductor switch is transferred to the conducting state, as a result of which
- the resonant circuit is detuned by means of current being applied to the auxiliary winding and/or
- the input of the rectifier is shorted,
wherein the auxiliary winding is arranged on the same coil core as the secondary winding, the secondary winding is composed of part-windings, wherein a capacitor is wired in series with each part-winding.

## Revendications

1. Système de transmission d'énergie par induction,
dans lequel un enroulement primaire est couplé par induction à un enroulement secondaire,
dans lequel un circuit oscillant est formé à partir de l'enroulement secondaire et d'au moins un condensateur connecté en série et/ou en parallèle,
dans lequel un courant ou le courant traversant l'enroulement secondaire est fourni à un redresseur dont la tension de sortie alimente un consommateur,
dans lequel un dispositif sectionneur, en particulier un contact de commutation, un commutateur et/ou une connexion enfichable, est agencé entre le consommateur et le redresseur,
**caractérisé en ce que**
- un commutateur à semi-conducteur pouvant être commandé et permettant de court-circuiter l'entrée du redresseur est fourni
- et dans lequel un commutateur à semi-conducteur pouvant être commandé, permettant d'alimenter un enroulement auxiliaire et au moyen duquel le circuit oscillant peut être désaccordé est fourni,
dans lequel l'enroulement auxiliaire est agencé sur le même noyau de bobine que l'enroulement secondaire,
dans lequel l'enroulement secondaire est composé de sous-enroulements, dans lequel un condensateur est connecté en série à chaque sous-enroulement.

2. Système selon la revendication 1,
**caractérisé en ce que**
le redresseur est configuré en pont de Graetz.

3. Système selon au moins une quelconque des revendications précédentes,
**caractérisé en ce que**
le circuit oscillant est un circuit oscillant en série.

4. Système selon au moins une quelconque des revendications précédentes,
**caractérisé en ce que**
un moyen permettant de détecter la tension appliquée à la sortie du redresseur génère une tension de commande pour le ou les commutateur(s) à semi-conducteur pouvant être commandé(s),
en particulier dans lequel le semi-conducteur passe de l'état isolant à l'état conducteur si la tension appliquée à la sortie du redresseur dépasse une valeur critique.

5. Système selon au moins une quelconque des revendications précédentes,
**caractérisé en ce que**
l'enroulement primaire est alimenté en courant alternatif par une source de courant.

6. Système selon au moins une quelconque des revendications précédentes,
**caractérisé en ce que**
la fréquence de résonance du circuit oscillant est au moins essentiellement égale à la fréquence ou à une fréquence du courant alternatif.

7. Système selon au moins une quelconque des revendications précédentes,
**caractérisé en ce que**
l'enroulement auxiliaire est alimenté en courant unipolaire lorsque le commutateur à semi-conducteur pouvant être commandé est dans l'état conducteur.

8. Système selon au moins une quelconque des revendications précédentes,
**caractérisé en ce que**
un condensateur permettant de filtrer la tension est agencé à la sortie du redresseur.

9. Système selon au moins une quelconque des revendications précédentes,
**caractérisé en ce que**
le consommateur comprend un accumulateur d'énergie.

10. Procédé permettant de faire fonctionner un système selon au moins une quelconque des revendications précédentes,
dans lequel l'enroulement primaire est couplé par induction à l'enroulement secondaire,
**caractérisé en ce que**
la tension de sortie du redresseur augmente lorsque le consommateur est déconnecté de la sortie du redresseur, et le commutateur à semi-conducteur pouvant être commandé est placé dans l'état conducteur lorsqu'une valeur critique est dépassée, grâce à quoi
- le circuit oscillant est désaccordé au moyen de l'alimentation de l'enroulement auxiliaire et/ou
- l'entrée du redresseur est court-circuitée,
dans lequel l'enroulement auxiliaire est agencé sur le même noyau de bobine que l'enroulement secondaire,
l'enroulement secondaire est composé de sous-enroulements, dans lequel un condensateur est connecté en série à chaque sous-enroulement.
